(19) Europäisches Patentamt
European Patent Office
Office européen des brevets

(11) **EP 4 667 910 A1**

(12) **EUROPEAN PATENT APPLICATION**

(43) Date of publication:
**24.12.2025 Bulletin 2025/52**

(21) Application number: **24305957.3**

(22) Date of filing: **18.06.2024**

(51) International Patent Classification (IPC):
***G01N 21/64*** (2006.01)

(52) Cooperative Patent Classification (CPC):
**G01N 21/6408;** G01N 21/6458

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Centre National de la Recherche Scientifique**
**75016 Paris (FR)**
• **SORBONNE UNIVERSITE**
**75006 Paris (FR)**
• **MUSEUM NATIONAL D'HISTOIRE NATURELLE**
**75005 Paris (FR)**
• **Ecole Normale Supérieure**
**75005 Paris (FR)**

(72) Inventors:
• **JULLIEN, Ludovic**
**94110 Arcueil (FR)**
• **LAHLOU, Aliénor**
**75014 Paris (FR)**
• **LE SAUX, Thomas**
**92800 Puteaux (FR)**
• **MERCERON, Hélene**
**85270 Saint Hilaire de Riez (FR)**
• **COGHILL, Ian**
**Invergordon Highland (GB)**

(74) Representative: **IPAZ**
**Bâtiment Platon**
**Parc Les Algorithmes**
**91190 Saint-Aubin (FR)**

(54) **METHOD FOR DETERMINING LUMINESCENCE KINETIC INFORMATION OF REVERSIBLY PHOTO-CONVERTIBLE LUMINESCENT SPECIES**

(57) The invention relates to a method for determining luminescence kinetic information of at least one reversibly photo-convertible luminescent species, comprising:
- illumination of the sample with at least a first and second excitation light, the intensities of the first and second excitation lights being periodically modulated at different frequencies,
- detection of the luminescence light and extraction, for a plurality of modulation frequencies of the first excitation light, of an intensity amplitude of the luminescence light,
- determination of a kinetic information of the species from the luminescence amplitude.

The invention also relates to another method for determining luminescence kinetic information of such species, comprising:
- illumination of the sample with at least a first excitation light, the intensity of the first excitation light being periodically modulated,
- detection of the luminescence light and extraction of an average luminescence intensity,
- determination of a kinetic information of the species from the average luminescence intensity.

Fig. 1

**Description**

**Field of the invention**

The present invention relates to a method for determining luminescence kinetic information of at least one reversibly photo-convertible luminescent species in a sample.

The field of the invention is luminescence imaging in micro- and macro format, and biological and/or biochemical analysis.

In the present document, the term 'species' indicates a chemical species such as a molecule, a molecular ion, or a complex. A 'reversibly photo-convertible species' (or 'photo-switchable' or 'photo-activatable') is a species having at least two distinct states, with different luminescence properties, and capable of commutating from one state to the other reversibly under the effect of light. Examples of reversibly photoactivatable luminescent species are the 'Dronpa' protein and the 'Spinach - DFHBI' complex ('Spinach' being an RNA aptamer and DFHBI a fluorogenic probe). These species may, in particular, be used as labels or markers.

Luminescence includes fluorescence and phosphorescence.

**Background**

Imaging photoactive light-emissive systems intervenes in multiple technical fields and applications such as fluorescence and phosphorescence bioimaging, sensing films for active packaging and mapping oxygenation, encryption and anti-counterfeiting, dye-assisted surgery, or process control of silicon wafers and solar cells.

The obtained images generally carry spectral information. The time response of the system to illumination enables for providing complementary information for additional selectivity. However, imaging kinetics is demanding since most lifetimes of photo-activated states are in a short ns-$\mu$s range. The optical setups for luminescence lifetime imaging have accordingly been equipped with sophisticated detectors endowed with high-frequency modulation, or fast gating, in order to overcome the frequency/time (kHz/ms) limitation of standard cameras.

Several techniques have been developed to discriminate luminophores, and in particular fluorophores, using dynamical, or temporal, information characterizing their absorption-fluorescence emission photocycles.

In reversibly photoswitchable fluorophores (RSFs), illumination drives several photocycles including photochemical and thermal steps, which imply a wide range of relaxation times ($\mu$s to s), thereby enabling discrimination at timescales compatible with real time observations of biological phenomena. Several protocols such as OPIOM and Speed OPIOM have exploited the time response of the fluorescence to light variations for imaging reversibly photoswitchable species that may not be spectrally discriminated.

OPIOM (Out-of-Phase Imaging after Optical Modulation), described in [Querard 2015] and in WO 2015/075209, is a method in which a sample containing a reversibly photoswitchable species is illuminated with a periodically modulated light wave. It has been shown that the component of the fluorescence intensity emitted by the fluorophores at the same frequency and in phase quadrature with respect to the excitation wave exhibits a peak for particular, species-dependent, values of the illumination intensity and modulation frequency, called resonance conditions.

A variant of OPIOM, Speed OPIOM, is described in [Querard 2017] and in WO 2018/041588. This protocol implements two-wavelength illumination, thereby achieving higher acquisition frequencies.

However, the OPIOM and Speed OPIOM protocols do not allow for retrieving a kinetic information on reversibly photoswitchable species using standard optical detectors or cameras when fast photoswitching times are involved.

**Summary of the invention**

A purpose of the present invention is to overcome at least one of the drawbacks of the known techniques.

A purpose of the present invention is to propose a method for determining luminescence kinetic information of at least one reversibly photo-convertible luminescent species, wherein the method may be carried out using a standard camera.

Another purpose of the invention is to propose a method for determining luminescence kinetic information of at least one reversibly photo-convertible luminescent species, enabling wide-field luminescence lifetime imaging on simple optical setups with standard cameras.

Still another purpose of the invention is to propose a method for determining luminescence kinetic information of at least one reversibly photo-convertible luminescent species, going beyond the discrimination of one species from another.

At least one of these aims is achieved by a method according to a first aspect of the invention. The method for determining luminescence kinetic information of at least one reversibly photo-convertible luminescent species in a sample, the method comprising the steps of:

a) illumination of the sample with at least a first and a second excitation light, the intensity of the first excitation light being periodically modulated at a frequency $f_1$, and the intensity of the second excitation light being periodically modulated at a frequency $f_2$, wherein $f_1 \neq f_2$,
the excitation lights being adapted to promote a luminescence light emission from the at least one luminescent species,

b) detection, with an optical detector, of the luminescence light, the intensity of the luminescence light being modulated at a frequency difference $\Delta f = f_1 - f_2$, for a plurality of modulation frequencies, $f_1$, of the first excitation light,

c) extraction, for a plurality of modulation frequencies, $f_1$, of the first excitation light, of an amplitude of the intensity of the luminescence light,

d) determination of a kinetic information of the at least one reversibly photo-convertible luminescent species from the dependence of the extracted luminescence amplitude on the modulation frequency $f_1$ of the first excitation light.

The method according to the first aspect of the invention is referred to as HIOM (Heterodyne Imaging under Optical Modulation). In the HIOM protocol, low angular-frequency modulated amplitudes of the luminescence from a species under periodic illumination of two excitation lights, modulated at two fundamental high angular frequencies, are acquired at low acquisition frequency. Kinetic information, such as a map of luminescence lifetime, may be retrieved from the dependence of the extracted luminescence amplitude on one of the modulation frequencies of the excitation lights.
In the present document, the term "excitation light" refers to an excitation light beam from an excitation light source.
According to an embodiment, the average intensities of the first and the second excitation light, the modulation frequency, $f_1$, of the first excitation light, and the frequency difference, $\Delta f$, may be chosen to approach the maximum of

■ the phase-quadrature luminescence amplitude when the modulation periods of the first and the second excitation lights are offset by 0 or $\pi$,

■ the in phase luminescence amplitude when the modulation periods of the first and the second excitation lights are offset by $\pi/2$ or $3\pi/2$.

These amplitudes are measured using a heterodyne detection technique.
The first excitation light may have a wavelength $\lambda_1$, and the second excitation light may have a central wavelength $\lambda_2$. The wavelengths may be equal, $\lambda_1 = \lambda_2$, or different, $\lambda_1 \neq \lambda_2$.
In case of equal central wavelengths, it is possible to use two light beams of which the intensity is modulated at two different modulation frequencies. It is also possible to use a single light beam of which the intensity is modulated at two different modulation frequencies. This latter modulation scheme may be achieved, for example, with a function generator.
It is also possible to implement more than two light beams to obtain modulated excitation light at two frequencies.
As used herein, the term "wavelength" may designate the wavelength of a narrow-band, or monochromatic, light source. It may also designate the central wavelength of a wide-spectrum light source.
According to an embodiment, the frequency difference, $\Delta f$, of the excitation lights may be below 1000 Hz.
According to a second aspect of the same invention, it is proposed a method for determining luminescence kinetic information of at least one reversibly photo-convertible luminescent species in a sample, the method comprising the steps of:

a) illumination of the sample with at least a first excitation light, the intensity of the first excitation light being periodically modulated at a frequency, f,
the first excitation light being adapted to promote a luminescence light emission from the at least one luminescent species,

b) detection of the luminescence light with an optical detector, the intensity of the luminescence light being an average intensity, for a plurality of modulation frequencies, f, of the at least first excitation light,

c) extraction, for a plurality of modulation frequencies, f, of the at least first excitation light, of the average luminescence intensity,

d) determination of a kinetic information of the at least one reversibly photo-convertible luminescent species from the dependence of the average luminescence intensity on the modulation frequency, f, of the first excitation light.

The method according to the second aspect of the invention is referred to as RIOM (Rectified Imaging under Optical Modulation). In the RIOM protocol, the luminescence from a species under periodic illumination modulated at fundamental high angular frequency is acquired at a single low acquisition frequency. Kinetic information, such as a map of luminescence lifetime, may be retrieved from exploiting the dependence of the average luminescence intensity on the modulation frequency.

According to an embodiment, referred to as RIOM1, the illumination step may comprise the illumination of the sample with a first excitation light, the intensity of the first excitation light being periodically modulated at a frequency, f.

Alternatively, referred to as RIOM2, the illumination step may comprise the illumination of the sample with a first excitation light and a second excitation light, the intensity of the first excitation light being periodically modulated at a frequency, f, and the intensity of the second excitation light being constant.

Still alternatively, referred to as RIOM3, the illumination step may comprise the illumination of the sample with a first excitation light and a second excitation light, the intensities of the first and second excitation lights being periodically modulated at the same frequency, f, and in antiphase with respect to each other.

In the case of illumination with a first and a second excitation light, the first excitation light has a wavelength $\lambda_1$, and the second excitation light has a wavelength $\lambda_2$, and these wavelengths may be equal, $\lambda_1 = \lambda_2$, or different, $\lambda_1 \neq \lambda_2$.

The average intensity of the at least first excitation light and the modulation frequency, f, of the at least first excitation light may be chosen to approach the maximum of the amplitude of the frequency-induced dependence of the average luminescence intensity normalized by the luminescence intensity under the average intensity of the at least first excitation light.

In particular, in RIOM1, the average intensity of the first excitation light and the modulation frequency, f, of the first excitation light may be chosen to approach the maximum of the amplitude of the frequency-induced dependence of the average luminescence intensity normalized by the average intensity of the at least first excitation light.

In RIOM2, the average intensities of the first and second excitation lights and the modulation frequency, f, of the first excitation light may be chosen to approach the maximum of the amplitude of the frequency-induced dependence of the average luminescence intensity normalized by the luminescence intensity under the average intensities of the first and second excitation lights.

In RIOM3, the average intensities of the first and second excitation lights and the modulation frequency, f, of the first and second excitation lights may be chosen to approach the maximum of the amplitude of the frequency-induced dependence of the average luminescence intensity normalized by the luminescence intensity under the average intensities of the first and second excitation lights.

The following embodiments may apply to the method according to both the first and second aspect of the invention.

According embodiments of the invention, the determination of the kinetic information may comprise the extraction of a luminescence lifetime of the at least one luminescent species.

The method may further comprise imaging the luminescence lifetime according to a field of view of the detector.

According to an embodiment, the determination of the kinetic information may comprise the establishment of a Bode diagram linking the extracted luminescence signal to the modulation frequencies of the at least first excitation light.

The luminescence signal corresponds to the extracted amplitude of the luminescence intensity in the HIOM protocol and to the average luminescence intensity in the RIOM protocol.

According to an embodiment, the determination of the kinetic information may be realized using a fitting function comprising a ratio of two polynomial functions, the polynomial functions each comprising a sum of polynomials of the luminescence lifetime and the modulation frequency of the at least first excitation light.

Preferably, the polynomials are of the order of 4 or less.

According to embodiments, the periodical modulation of the excitation light(s) may be of sinusoidal form or square-wave form, or any other periodic form.

The at least one reversibly photo-convertible luminescent species presents a first and at least a second chemical state.

The reversibly photo-convertible luminescent species may be photo-convertible from the first to the at least second state upon illumination with the first excitation light, and from the at least second to the first state through thermal relaxation.

Alternatively, the luminescent species may be photo-convertible from the first to the at least second state upon illumination with the first excitation light, and from the at least second to the first state upon illumination with the second excitation light.

Luminescence light is emitted at least by one of the chemical states involved in the conversions.

According to another aspect of the same invention, it is proposed a device for carrying out a method according to any one of the preceding claims, the device comprising

- illumination means configured for carrying out method step a),

- an optical detector configured for carrying out method step b), and

- a data processing unit configured for carrying out method steps c) and d).

According to yet another aspect of the same invention, it is proposed the use of a method according to the first and/or the second aspect and/or a device of the invention for reporting on the kinetic information of a physiological state of photosynthetic organisms.

## Description of the figures and embodiments

Other advantages and characteristics will become apparent on examination of the detailed description of an embodiment which is in no way limitative, and the attached figures, where:

- FIGURE 1 shows a diagrammatic representation of the principle implemented with the present invention;

- FIGURE 2 shows a diagrammatic representation of a device according to an embodiment of the invention;

- FIGURE 3 shows a diagrammatic representation of a device according to another embodiment of the invention; and

- FIGURES 4 to 9 show measurement results obtained with a method according to an embodiment of the present invention.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the Figures, elements common to several Figures may keep the same reference.

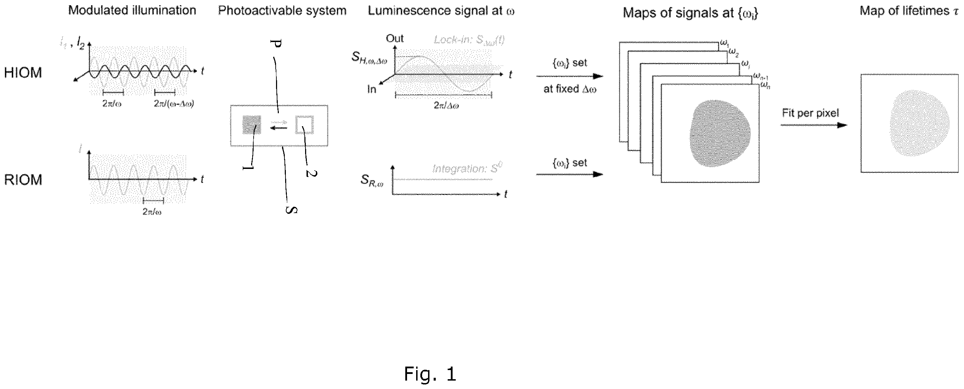

Figure 1 is a schematic illustration of the principle of a method for determining luminescence kinetic information of at least one reversibly photo-convertible luminescent species in a sample according to aspects of the present invention.

The method comprises the illumination of a sample S by at least one excitation light. The sample S comprises at least one reversibly photo-convertible species, or label, P. Under the effect of light, the species can switch between at least two different chemical states, a first state **1** and at least a second state **2.** The two chemical states possess a different brightness.

According to a first aspect, referred to as HIOM, the sample S is illuminated with a first excitation light of which the intensity $I_1$ is periodically modulated at a frequency $f_1$, or angular frequency $\omega_1$, and a second excitation light of which the intensity $I_2$ is periodically modulated at a frequency $f_2$, or angular frequency $\omega_1$, wherein $f_1 \neq f_2$. In the example represented in Figure 1, the excitation lights are modulated sinusoidally and in antiphase with each other. According to alternative embodiments of the invention, the modulation periods of the first and the second excitation lights may also be offset by 0, $\pi$/2 or $3\pi/2$. The excitation lights may also be periodically modulated according to other than the sinusoidal scheme, such as by a square wave.

The wavelengths $\lambda_1$, $\lambda_2$ of the two excitation lights may be equal or different.

The species P is photo-convertible from the first chemical state **1** to the at least second chemical state **2** upon illumination with the first excitation light $I_1$, and from the at least second to the first state either through thermal relaxation, or upon illumination with the second excitation light $I_2$. Luminescence light (with a component modulated at angular frequency $\Delta\omega$ indicated by $S_{\Delta\omega}(t)$) is emitted at least by one of the chemical states involved in the conversions; its measured intensity varies periodically at the difference of the frequencies of the excitation lights.

The intensity of the luminescence light may be decomposed in an in-phase component being in phase with the first excitation-light modulation and a quadrature component being quadrature-delayed with respect to the first excitation-light modulation. The amplitudes of the in-phase and quadrature-delayed components of the luminescence S modulated at low angular frequency $\Delta\omega = \omega_1 - \omega_2$ are imaged at low acquisition frequency.

Signals are measured for a plurality of modulation frequencies $\omega_1$ of the first excitation light at constant $\Delta\omega$. In the example represented in Figure 1, a map of the luminescence lifetime $\tau$ is retrieved from exploiting the dependence of the quadrature-delayed S component on $\omega_1$ at constant angular frequency $\Delta\omega$.

The frequency difference, $\Delta f$, is preferably below 1000 Hz.

According to a second aspect of the invention, referred to as RIOM, the sample S is illuminated with an excitation light of which the intensity I is periodically modulated at a frequency f, or angular frequency $\omega$. In the example represented in Figure 1, the excitation light is modulated sinusoidally. According to alternative embodiments, the sample may be additionally illuminated with a second excitation light of which the intensity may be periodically modulated at the same frequency f, or angular frequency $\omega$, and which is in antiphase with the first excitation light, or of which the intensity is constant.

As with the first aspect, the excitation lights may also be periodically modulated according to other than the sinusoidal scheme, such as by a square wave.

The species P is photo-convertible from the first chemical state **1** to the at least second chemical state **2** upon illumination with the (first) excitation light $I_1$, and from the at least second to the first state through thermal relaxation, or upon illumination with the second excitation light $I_2$. The average value of the luminescence light (indicated by $S^0$) is emitted at least by one of the chemical states involved in the conversions. The average luminescence $S^0$ is imaged at low acquisition frequency.

Signals are measured for a plurality of modulation frequencies $\omega$ of the excitation light. In the example represented in Figure 1, a map of the luminescence lifetime $\tau$ is retrieved from exploiting the dependence of $S^0$ on $\omega$.

In the examples represented in Figure 1, the first, thermodynamically more stable state is indicated by **1,** and the at least second, thermodynamically less stable state is indicated by **2.**

In the following, a theoretical analysis of the dynamic behaviour of a reversibly photo-convertible luminescent species P illuminated with light of intensity $I(t)$ involving two components $I_1(t)$ and $I_2(t)$ at wavelengths $\lambda_1$ and $\lambda_2$, respectively, will be provided.

It is assumed that the dynamic behaviour of the luminescent species P may be reliably described by the two-state exchange

$$k_{12}(t)$$

$$\mathbf{1} \quad \rightleftharpoons \quad \mathbf{2} \qquad\qquad (1)$$

$$k_{21}(t).$$

In the reaction (1), the thermodynamically most stable state **1** is photochemically converted to the thermodynamically less stable state **2** at rate constant $k_{12}(t) = \sigma_{012,1}I_1(t) + \sigma_{12,2}I_2(t)$ from which it can relax back to the initial state **1** either by a photochemically- or a thermally-driven process at rate constant $k_{21}(t) = \sigma_{21,1}I_1(t) + \sigma_{21,2}I_2(t) + k_{21}^{\Delta}$, where $\sigma_{12,1}I_1(t)$, $\sigma_{12,2}I_2(t)$, $\sigma_{21,1}I_1(t)$, $\sigma_{21,2}I_2(t)$, and $k_{21}^{\Delta}$ are respectively the photochemical and the thermal contributions of the rate constants. $\sigma_{12,1}$ and $\sigma_{21,1}$ are the molecular action cross-sections for photoisomerization from state **1** to state **2** and vice versa, respectively, when illuminated with wavelength $\lambda_1$, and $\sigma_{12,2}$ and $\sigma_{21,2}$ are the molecular action cross-sections for photoisomerization from state **1** to state **2** and vice versa, respectively, when illuminated with wavelength $\lambda_2$.

In that case, the molecular action cross-sections for photoisomerization $\sigma_{12,1}$ and $\sigma_{21,1}$ (at $\lambda_1$), $\sigma_{12,2}$ and $\sigma_{21,2}$ (at $\lambda_2$), and the thermal rate constant $k_{21}^{\Delta}$ fully define the behavior of the photo-convertible probe. In the following, $\lambda_1$ and $\lambda_2$ can be either different or identical. Similarly, the components of illumination $I_1(t)$ and $I_2(t)$ can as well more favorably promote the photoconversion of the state **1** to the state **2,** or the one of the state **2** to the state **1.**

We assume that the system is closed and either uniformly illuminated or that it can be considered homogeneous at any time of its evolution. The evolutions of the concentrations 1 (concentration of P in state **1)** and 2 (concentration of P in state **2)** may be written, using the two-state exchange (1):

$$\frac{d1}{dt} = -k_{12}(t)1 + k_{21}(t)2 \qquad\qquad (2)$$

$$\frac{d2}{dt} = k_{12}(t)1 - k_{21}(t)2. \qquad\qquad (3)$$

In the following, the response of the luminescence emission from the reversibly photo-convertible luminescent species P will be analyzed when it is submitted to various periodic light modulation situations.

The principle of the theoretical analysis, which is common to all considered periodic light modulations herein, is first considered.

For this, it is considered that the reversibly photo-convertible luminescent species P is submitted to periodically modulated illumination. To be the most general possible, the illumination is assumed to involve two components: a periodic

illumination $I_1(t)$ at wavelength $\lambda_1$ with average light intensity $I_1^0$ and a periodic illumination $I_2(t)$ at wavelength $\lambda_2$ with average light intensity $I_2^0$.

In the most general case, it may be written

$$I(t) = I_1(t) + I_2(t) \qquad (4)$$

$$I_1(t) = I_1^0[1 + \alpha h_1(t)] \qquad (5)$$

$$I_2(t) = I_2^0[1 + \alpha\delta\, h_2(t)], \qquad (6)$$

with $\delta = 0$ or 1. In equations (5) et (6), $\alpha$ and $\alpha\delta$ measure the amplitude of light modulation, and $h_1(t)$ and $h_2(t)$ designate periodic functions.

The following theoretical analysis notably enables us to cover the case of the absence of illumination at wavelength $\lambda_2$ (by making $I_2^0 = 0$) or the case of non-modulated illumination at wavelength $\lambda_2$ (by setting $\delta = 0$). We introduce the notations

$$I^0 = I_1^0 + I_2^0 \qquad (7)$$

$$k_{12}^0 = k_{12,1}^0 + k_{12,2}^0 \qquad (8)$$

$$k_{21}^0 = k_{21,1}^0 + k_{21,2}^0 + k_{21}^\Delta, \qquad (9)$$

where

$$k_{12,1}^0 = \sigma_{12,1} I_1^0 \qquad (10)$$

$$k_{21,1}^0 = \sigma_{21,1} I_1^0 \qquad (11)$$

$$k_{12,2}^0 = \sigma_{12,2} I_2^0 \qquad (12)$$

$$k_{21,2}^0 = \sigma_{21,2} I_2^0 \qquad (13)$$

Equations (4), (5), and (6) are used to express the rate constants

$$k_{12}(t) = k_{12,1}^0[1 + \alpha h_1(t)] + k_{12,2}^0[1 + \alpha\delta h_2(t)] \qquad (14)$$

$$k_{21}(t) = k_{21,1}^0[1 + \alpha h_1(t)] + k_{21,2}^0[1 + \alpha\delta h_2(t)] + k_{21}^\Delta. \qquad (15)$$

The relaxation time $\tau_{12}^0$ of the reversibly photo-convertible luminophore when it is submitted to illumination at constant light intensity I° may be written as

$$\tau_{12}^0 = \frac{1}{k_{12}^0 + k_{21}^0} \qquad (16)$$

$1^0$ and $2^0$ are the concentrations of P in state 1 and 2 at the associated photo-stationary state reached after $\tau_{12}^0$ :

$$1^0 = P_{tot} - 2^0 = \frac{1}{1 + K_{12}^0} P_{tot} \qquad (17),$$

where

$$K_{12}^0 = \frac{k_{12}^0}{k_{21}^0} \qquad (18)$$

and the total concentration in reversibly photo-convertible label P, $P_{tot} = 1 + 2$.

Upon expanding the concentration expressions by introducing a function f(t)

$$2 = 2^0 + \alpha f(t) \qquad (19)$$

$$1 = 1^0 - \alpha f(t), \qquad (20)$$

the system of differential equations governing the temporal evolution of the concentrations of P in 1 and 2 is solved with equations (2) and (3) to yield

$$\frac{df(x)}{dx} = -f(x) + [\mathfrak{a}_1 - \mathfrak{b}_1 f(x)]h_1(x) + \delta[\mathfrak{a}_2 - \mathfrak{b}_2 f(x)]h_2(x), \qquad (21)$$

where

$$x = \frac{t}{\tau_{12}^0} \qquad (22)$$

$$\mathfrak{a}_1 = \rho_{12}^0 \Delta_{12,1}^0 \tau_{12}^0 \qquad (23)$$

$$\mathfrak{b}_1 = \alpha\left(\sigma_{12,1} + \sigma_{21,1}\right) I_1^0 \tau_{12}^0 \qquad (24)$$

$$\mathfrak{a}_2 = \rho_{12}^0 \Delta_{12,2}^0 \tau_{12}^0 \qquad (25)$$

$$\mathfrak{b}_2 = \alpha\left(\sigma_{12,2} + \sigma_{21,2}\right) I_2^0 \tau_{12}^0, \qquad (26)$$

and

$$\rho_{12}^0 = k_{12}^0 1^0 = k_{21}^0 2^0 \qquad (27)$$

$$\Delta_{12,1}^0 = \frac{k_{12,1}^0}{k_{12,1}^0 + k_{12,2}^0} - \frac{k_{21,1}^0}{k_{21,1}^0 + k_{21,2}^0 + k_{21}^\Delta} \qquad (28)$$

$$\Delta_{12,2}^0 = \frac{k_{12,2}^0}{k_{12,1}^0 + k_{12,2}^0} - \frac{k_{21,2}^0}{k_{21,1}^0 + k_{21,2}^0 + k_{21}^\Delta} \qquad (29)$$

designate respectively the steady-state rate of reaction corresponding to equation (1) in the photo-stationary state, and the differences of the relative contributions of the average of the modulated light ( $I_1^0$ and $I_2^0$ , respectively) to drive the transition from state **1** to state **2** or from state **2** to state **1,** respectively.

After the relaxation time $\tau_{12}^0$ , a permanent regime is established in which f(x) is a continuous periodic function.

In the various embodiments of the invention, the modulation of the excitation light may involve one (denoted ω) or at least two (denoted $\omega_1$ and $\omega_2$) fundamental modulation frequencies.

In a first case, the Fourier series associated to *f (x)* can be written

$$f(\theta x) = a^0 + \sum_{n=1}^{+\infty}\left[a^{n,\cos}\cos(n\theta x) + b^{n,\sin}\sin(n\theta x)\right], \tag{30}$$

where

$$\theta = \omega\tau_{12}^0, \tag{31}$$

and $a^{n,\cos}$ and $b^{n,\sin}$ designate the amplitudes of the n-th components of the Fourier series.

In contrast, in a second case, the Fourier series associated to *f(x)* can be expressed as

$$f(\theta_1 x, \theta_2 x) \;=\; \sum_{n=0}^{+\infty}\sum_{m=-\infty}^{+\infty}\left\{a^{n,m,\cos}\cos[(n\theta_1 + m\theta_2)x] + b^{n,m,\sin}\sin[(n\theta_1 + m\theta_2)x]\right\}, \tag{32}$$

where

$$\theta_1 = \omega_1\tau_{12}^0 \tag{33}$$

$$\theta_2 = \omega_2\tau_{12}^0, \tag{34}$$

and $a^0 = a^{0,0,\cos}$, $a^{n,m,\cos}$ and $b^{n,m,\sin}$ correspond to the amplitudes of the zeroth and {n,m}-th components of the Fourier series.

Either the $a^{n,\cos}$ and $b^{n,\sin}$, or the $a^0$, $a^{n,m,\cos}$, and $b^{n,m,\sin}$ terms can be extracted from equation (21) upon identifying the amplitudes of the components of the same order (harmonic balance). The resulting set of equations can then be transformed to explicit the amplitudes of the concentration modulations at all modulation frequencies. Thus, it is possible to write either

$$2 = 2^0 + \alpha \sum_{n=1}^{+\infty}\left[2^{n,\sin}sin(n\theta x) + 2^{n,\cos}cos(n\theta x)\right] \tag{35}$$

$$1 = 1^0 - \alpha \sum_{n=1}^{+\infty}\left[2^{n,\sin}sin(n\theta x) + 2^{n,\cos}cos(n\theta x)\right], \tag{36}$$

where

$$2^0 = 2^0 + \alpha a^0 \tag{37}$$

$$1^0 = 1^0 - \alpha a^0 \tag{38}$$

$$2^{n,\sin} = -1^{n,\sin} = b^{n,\sin} \tag{39}$$

$$2^{n,\cos} = -1^{n,\cos} = a^{n,\cos}, \tag{40}$$

or

$$2 = 2^0 + \alpha \sum_{n=0}^{+\infty} \sum_{m=-\infty}^{+\infty} \left\{ 2^{n,m,\sin}\sin[(n\theta_1 + m\theta_2)x] + 2^{n,m,\cos}\cos[(n\theta_1 + m\theta_2)x] \right\}$$

$$(41)$$

$$1 = 1^0 - \alpha \sum_{n=0}^{+\infty} \sum_{m=-\infty}^{+\infty} \left\{ 2^{n,m,\sin}\sin[(n\theta_1 + m\theta_2)x] + 2^{n,m,\cos}\cos[(n\theta_1 + m\theta_2)x] \right\}$$

$$(42)$$

where

$$2^0 = 2^0 + \alpha a^0 \qquad\qquad (43)$$

$$1^0 = 1^0 - \alpha a^0 \qquad\qquad (44)$$

$$2^{n,m,\sin} = -1^{n,m,\sin} = b^{n,m,\sin} \qquad\qquad (45)$$

$$2^{n,m,\cos} = -1^{n,m,\cos} = a^{n,m,\cos}, \qquad\qquad (46)$$

with $a^0 = a^{0,0,\cos}$.

In the following, the luminescence intensity will be derived.

Two cases may be considered:

In the case of phosphorescent species, their luminescence signal is proportional to the concentration of the triplet state **2** and the time evolution of their phosphorescence intensity is governed by equations (35) and (41).

In the case of fluorescent species, reversibly photo-convertible fluorophores, and the photosynthetic apparatus, the time evolution of their fluorescence signal involves terms which are products of concentrations and light intensity. Hence, an observable $O_j$, i.e., a measurable property of a species, associated to the observation at the wavelength $\lambda_j$ with j = 1 or 2 is defined:

$$O_j(t) = Q_{1,j}1(t) + Q_{2,j}2(t). \qquad\qquad (47)$$

Subsequently, fluorescence emission $I_F(t)$ may be extracted from Eq.(48):

$$I_F(t) = O_1(t)I_1(t) + O_2(t)I_2(t). \qquad\qquad (48)$$

With the temporal dependence of 1(t) and 2(t) given in equations (35) and (36), one obtains

$$O_j(t) = \mathfrak{O}_j^0 + \sum_{n=1}^{\infty} \left[ \mathfrak{O}_j^{n,\sin}\sin(n\theta x) + \mathfrak{O}_j^{n,\cos}\cos(n\theta x) \right], \qquad\qquad (49)$$

with

$$\mathfrak{O}_j^0 = Q_{1,j}1^0 + Q_{2,j}2^0 = Q_{1,j}1^0 + Q_{2,j}2^0 + \left(Q_{2,j} - Q_{1,j}\right)\alpha a^0 \qquad\qquad (50)$$

$$\mathfrak{O}_{j}^{n,\sin} = \left(Q_{2,j} - Q_{1,j}\right)\alpha b^{n,\sin} \tag{51}$$

$$\mathfrak{O}_{j}^{n,\cos} = \left(Q_{2,j} - Q_{1,j}\right)\alpha a^{n,\cos} \tag{52}$$

and

$$I_F(t) = \mathfrak{I}_{\mathfrak{I}}^{0} + \sum_{n=1}^{\infty}\left[\mathfrak{I}_{\mathfrak{I}}^{n,\sin}\sin(n\theta x) + \mathfrak{I}_{\mathfrak{I}}^{n,\cos}\cos(n\theta x)\right]. \tag{53}$$

In contrast to the expressions of the amplitudes of the $O_j(t)$ terms which are generic, the expressions of the amplitudes of the $I_F(t)$ terms vary with the temporal dependence of the illumination.

With the temporal dependences of 1(t) and 2(t) as given in equations (41) and (42), it may be written

$$O_j(t) = \mathfrak{O}_{j}^{0} + \sum_{n=1}^{\infty}\left[\mathfrak{O}_{j}^{n,\sin}\sin(n\theta x) + \mathfrak{O}_{j}^{n,\cos}\cos(n\theta x)\right] \tag{54}$$

with

$$\mathfrak{O}_{j}^{0} = Q_{1,j}1^0 + Q_{2,j}2^0 = Q_{1,j}1^0 + Q_{2,j}2^0 + \left(Q_{2,j} - Q_{1,j}\right)\alpha a^0 \tag{55}$$

$$\mathfrak{O}_{j^{n,\sin}} = \left(Q_{2,j} - Q_{1,j}\right)\alpha b^{n,\sin} \tag{56}$$

$$\mathfrak{O}_{j^{n,\cos}} = \left(Q_{2,j} - Q_{1,j}\right)\alpha a^{n,\cos} \tag{57}$$

and

$$I_F(t) = \mathfrak{I}_{\mathfrak{I}}^{0} + \sum_{n=1}^{\infty}\left[\mathfrak{I}_{\mathfrak{I}}^{n,\sin}\sin(n\theta x) + \mathfrak{I}_{\mathfrak{I}}^{n,\cos}\cos(n\theta x)\right]. \tag{58}$$

Again, whereas the expressions of the amplitudes of the $O_j(t)$ terms are generic, the expressions of the amplitudes of the $I_F(t)$ terms vary with the temporal dependence of the illumination.

The temporal dependencies of the modulated illumination will now be considered for different embodiments of the invention.

For both aspects of the present invention (RIOM and HIOM), two types of modulated illumination (sinusoidal and square wave) are considered.

For a sinusoidal modulation of the illumination, its temporal dependence may be written as:
for RIOM:

$$I(t) = I_1^0[1 + \alpha h_1(t)] + I_2^0[1 + \alpha\delta h_2(t)] \tag{59}$$

$$h_1(t) = \sin(\omega t) \tag{60}$$

$$h_2(t) = \sin(\omega t + \varphi) \tag{61}$$

with $\delta = 0$, or $\delta = 1$, and $\varphi = \pi$;
for HIOM:

$$I(t) = I_1^0[1 + \alpha h_1(t)] + I_2^0[1 + \alpha h_2(t)] \tag{62}$$

$$h_1(t) = \sin(\omega_1 t) \tag{63}$$

$$h_2(t) = \sin(\omega_2 t + \varphi) \tag{64}$$

For a square-wave modulation of the illumination, its temporal dependence may be written as:
for RIOM:

$$I(t) = I_1^0[1 + \alpha h_1(t)] + I_2^0[1 + \alpha \delta h_2(t)] \tag{65}$$

$$h_1(t) = \frac{4}{\pi} \Sigma_{p=0}^2 \frac{1}{2 \times p + 1} \sin[(2 \times p + 1)\theta x] \tag{66}$$

$$h_2(t) = \frac{4}{\pi} \Sigma_{p=0}^2 \frac{1}{2 \times p + 1} \sin[(2 \times p + 1)\theta_2 x + \varphi] \tag{67}$$

with $\delta = 0$ or $\delta = 1$, and $\varphi = \pi$;
for HIOM:

$$I(t) = I_1^0[1 + \alpha h_1(t)] + I_2^0[1 + \alpha \delta h_2(t)] \tag{68}$$

$$h_1(t) = \frac{4}{\pi} \Sigma_{p=0}^2 \frac{1}{2 \times p + 1} \sin[(2 \times p + 1)\theta_1 x] \tag{69}$$

$$h_2(t) = \frac{4}{\pi} \Sigma_{p=0}^2 \frac{1}{2 \times p + 1} \sin[(2 \times p + 1)\theta_2 x + \varphi] \tag{70}$$

with $\delta = 0$ or $\delta = -1$.

The example of the square-wave modulation is given as a representative example of more complex modulations of the illumination.

Observables corresponding to the RIOM and HIOM aspects of the invention will now be described.

According to embodiments of the invention, the RIOM observable $S_{RIOM}$ is the average value of the luminescence signal $S(t)$ (either global or from each analyzed pixel) from the reversibly photo-convertible luminophore over an integer number $k$ of periods $T$ of modulated illumination. In practice,

$$S_{RIOM} = \frac{1}{kT} \int_0^{kT} S(t) dt. \tag{71}$$

This average value of the luminescence intensity is extracted using known measuring techniques.

According to embodiments of the invention, for $\varphi = \pi/2$ or $\varphi = -\pi/2$, the HIOM observable $S_{HIOM}$ is the amplitude of the in-phase component of the luminescence signal S(t), either global or from each analyzed pixel of the camera, from the reversibly photo-convertible luminophore modulated at $\omega_1 - \omega_2$ angular frequency, this component being in phase with the first excitation-light modulation.

Alternatively, for $\varphi = 0$ or $\varphi = \pi$, HIOM observable $S_{H\text{-}OPIOM}$ is the amplitude of the quadrature-delayed component of the luminescence signal S(t), either global or from each analyzed pixel, from the reversibly photo-convertible luminophore modulated at $\omega_1 - \omega_2$ angular frequency, this component being quadrature-delayed with respect to the first excitation-light modulation. H-OPIOM refers to "Heterodyne Out-of-Phase Imaging after Optical Modulation".

The amplitudes of the in-phase and/or quadrature-delayed components are extracted, for example, using lock-in detection of the luminescence signal or by analysis of the Fourier transform of the luminescence intensity.

As an example, the quadrature-delayed component of the luminescence signal with $\varphi = \pi$ is considered. In practice,

$$S_{\text{H-OPIOM}} = \frac{2}{kT} \int_0^{kT} S(t) \cos[(\omega_1 - \omega_2)t] \, dt. \tag{72}$$

In the method according to aspects of the invention, resonance conditions are determined in order to optimize the amplitudes of the observables. Indeed, the luminescence intensity exhibits a maximum for particular, species-dependent, values of the excitation illumination intensity and modulation parameters. These control parameters of the modulated illumination drive the values of the terms ( $K_{12}^0$, $\theta$) for the RIOM aspect, and the terms ( $K_{12}^0$, $\theta_1$, $\theta_2$) for the HIOM aspect.

The control parameters of the modulated illumination are tuned in 2-3 orders of magnitude-wide ranges. The mean light intensity/ies of the excitation light(s) must generate balanced proportions of the ground and photoactivated states of the luminescence species. The frequency/ies of the modulated illumination must be in the range of the inverse of the photoactivation time. The resonant control parameters are obtained by matching the mean light intensity/ies and frequency/ies of the modulated illumination with simple functions of the rate constants associated with the photoactivation.

According to the RIOM aspect of the invention, the average intensity of the (first) excitation light and its modulation frequency $f$ are chosen to approach the maximum of the amplitude of the frequency-induced dependence of the average luminescence intensity normalized by the luminescence intensity under the average intensity of the at least first excitation light.

The resonance conditions are summarized in table S1.

Table S1: Resonance conditions of the RIOM observable.

| Luminophore | Modulated illumination | $\delta$. | $\varphi$ | $\log_{10}K_{12}^0$ range | $\log_{10}K_{12}^{0,\max}$ | $\log_{10}\theta$ |
|---|---|---|---|---|---|---|
| Phosphorophores | Sine-wave | 0 | - | [-0.5;2.5] | 0.72 | $\leq 0$ |
| Fluorophores | Sine-wave | 0 | - | [-2;1] | -0.20 | $\leq 0$ |
| Fluorophores | Sine-wave | 1 | $\pi$ | [-2;0] | -0.66 | $\leq 0$ |
| Phosphorophores | Square-wave | 0 | - | [-1;2] | 0.54 | $\leq 0$ |
| Fluorophores | Square-wave | 0 | - | [-2;1] | -0.21 | $\leq 0$ |
| Fluorophores | Square-wave | 1 | $\pi$ | [-2;1] | -0.56 | $\leq 0$ |

According to the HIOM aspect of the invention, the average intensities of the first and the second excitation lights, the modulation frequency of the first excitation light $f_1$ and the frequency difference $\Delta f$ are chosen to approach the maximum of

- the phase-quadrature luminescence amplitude when the modulation periods of the first and the second excitation lights are offset by 0 or $\pi$,
- the in phase luminescence amplitude when the modulation periods of the first and the second excitation lights are offset by $\pi/2$ or $3\pi/2$.

The resonance conditions are summarized in table S2.

Table S2: Resonance conditions of the HIOM observable

| Luminophore | Modulated illumination | $\delta$ | $\varphi$ | $\log_{10}K_{12}^0$ range | $\log_{10}K_{12}^{0,\max}$ | $\log_{10}\theta$ |
|---|---|---|---|---|---|---|
| Phosphorophores | Sine-wave | 1 | $\pi$ | [-1;2.5] | 0.64 | $\leq 0$ |
| Fluorophores | Sine-wave | 1 | $\pi$ | [-3;1] | -0.69 | $\leq 0$ |
| Phosphorophores | Square-wave | 1 | $\pi$ | [-1;2] | 0.54 | $\leq 0$ |
| Fluorophores | Square-wave | 1 | $\pi$ | [-2;1] | -0.56 | $\leq 0$ |

The method according to aspects of the present invention further comprises the determination of the characteristic time associated with the photo-activation of the luminescent species P.

The amplitudes of the time varying terms contained in equations (49) and (53), and equations (54) and (58) depend on $\theta$, and $\theta_1$ and $\theta_2$ respectively. Hence, the investigation of the dependence of the observables of RIOM and HIOM on the applied angular frequency/ies is suitable to yield the characteristic time $\tau_{12}^0$. However, this retrieval necessitates to identify appropriate fitting functions.

Once the time dependence of the applied modulated illumination is known, it may be introduced into the master differential equation given in equation (21), in order to retrieve analytic expressions of the time varying terms contained in equations (49) and (53), and equations (54) and (58) upon truncating the Fourier expansion (30) or (32) at any order. In principle, the higher the order, the more precise the fitting function. However, the increase in the truncation order increases the number of fitting parameters as well.

The Fourier expansions (30) and (32) may be, for example, truncated at first and second order for retrieving the fitting function sought for. This choice ensures both a satisfactory fit over a range of angular frequencies delivering significant values of the RIOM and HIOM luminescence signals and limits the number of fitting parameters, thereby providing robustness of the fit.

Thus, two fitting functions are obtained allowing to retrieve the characteristic time $\tau_{12}^0$ from the dependence of the observables of RIOM and HIOM on the applied angular modulation frequency/ies:

In the RIOM protocol, a three floating-parameter fitting function is adopted, such as given in equation (73):

$$\mathcal{L}(\omega, p_1, p_2, p_3) = \frac{p_1\left(1+4\left(\omega\tau_{12}^0\right)^2\right)}{p_2+5\left(\omega\tau_{12}^0\right)^2+4\left(\omega\tau_{12}^0\right)^4} + p_3; \tag{73}$$

with fitting parameters $p_1$, $p_2$, and $p_3$.

In the HIOM protocol, another three floating-parameter fitting function is adopted, such as given in equation (74):

$$\mathcal{L}(\omega, p_1, p_2, p_3) = \frac{p_1\left(2+3\left(\gamma\omega\tau_{12}^0\right)+3\left(\gamma\omega\tau_{12}^0\right)^2\right)}{p_2+8\left(\gamma\omega\tau_{12}^0\right)+12\left(\gamma\omega\tau_{12}^0\right)^2+8\left(\gamma\omega\tau_{12}^0\right)^3+4\left(\gamma\omega\tau_{12}^0\right)^4} + p_3 \tag{74}$$

In equations (73) and (74), $\gamma = 1$ and $\gamma = 1.85$ with sine-wave and square-wave modulated illumination, respectively.

Fitting functions (73) and (74) comprise a ratio of two polynomial functions. Each polynomial function comprises a sum of polynomials of the luminescence lifetime $\tau_{12}^0$ and the modulation frequency $\omega$ of the least first excitation light. In this non-limitative example, the polynomials are of the order of 4 or less.

According to embodiments of the method according to the invention, images of the HIOM and RIOM observables, respectively, are collected for a set of high illumination-modulation frequencies. For each pixel of an image, a Bode diagram is obtained by linking the observable, i.e., the extracted luminescence amplitude component or the average luminescence intensity, to the modulation frequencies of the excitation light(s).

The appropriate fit function, as detailed above, or another treatment such as a ratio of two values at two frequencies, is then applied to each pixel of the HIOM or RIOM image. A map of lifetimes or kinetic information is extracted from this signal processing, depending on the type of processing.

Examples of implementations of the method according to the invention will be given below, after the description of devices configured to realize the method.

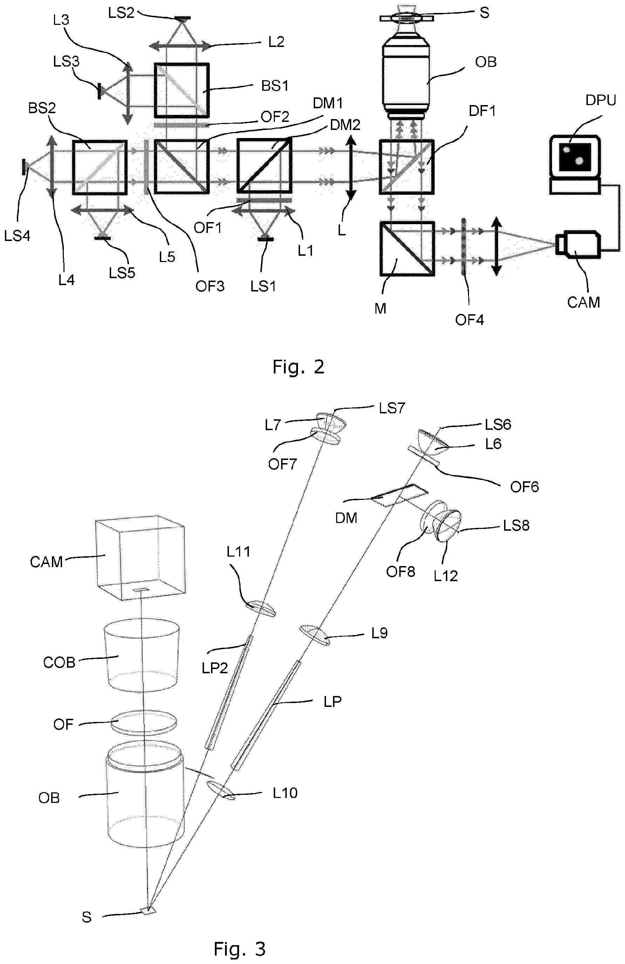

Figure 2 shows a diagrammatic representation and an optical layout of a device that may be implemented in the present invention. In particular, the device of Figure 2 is configured to carry out the method according to embodiments of the invention.

The device according to the embodiment represented in Figure 2 is based on an epi-fluorescence microscope.

The device comprises several light sources, namely light emitting diodes (LEDs): an ultraviolet 405 nm LED LS1, two blue 470 nm LEDs LS2, LS3, and two green 540 nm LEDs LS4, LS5. Each LED is driven by a LED driver (not shown). Two of these LED drivers can be controlled by a waveform generator (not shown) in order to generate a desired intensity modulation of the excitation lights.

The light from each LED is collimated using a high numerical aperture condenser lens L1-L5 (f = 16 mm). The light from the UV LED LS1 is filtered with a bandpass filter OF1. For the blue and green LED pairs, respectively, the collimated light beams from each LED LS2, LS3, LS4, LS5 are first combined using a 50:50 beam splitter BS1, BS2 before being filtered with a corresponding excitation filter OF2, OF3. The two resulting light beams are then combined with a dichroic mirror DM1 into a single beam which passes through a second dichroic mirror DM2 to mix with the collimated light beam coming from the UV LED LS1. A focusing lens L (f = 75 mm) is used to focus light at the back focal plane of an objective OB after being reflected by a dichroic filter DF1. The objective OB may be, for example, a 10× (N.A. 0.5) or a 50× (N.A. 0.8) objective. The objective OB forms an illuminated area on the sample S, the size of the area depending on the magnitude of the objective.

The sample S may be a fluorescent sample, such as cells labelled with the reversibly photoswitchable fluorescent protein Dronpa-2 or Platinum octaethyl porphyrin (PtOEP).

Fluorescence emission from the sample is collected with the objective OB, reflected by a mirror M, filtered by a band pass filter OF4 before being refocused onto a sensor of a camera CAM by another focusing lens L7 (f = 150 mm).

In the example of Figure 2, the blue light sources LS2, LS3 are adapted to the excitation of fluorescence emission from Dronpa-2, and the green light sources LS4, LS5 are adapted to the excitation of fluorescence emission from PtOEP.

Figure 3 shows a diagrammatic representation of another device that may be implemented in the present invention. In particular, the device of Figure 3 is configured to carry out the method according to embodiments of the invention.

The device according to the embodiment represented in Figure 3 is a fluorescence macro-imager.

The device comprises two illumination paths and one imaging path, with separated optical axes.

The imaging path consists of a macroscope objective OB to collimate the light originating from the sample plane in which a sample S is positioned, and an emission filter OF which may be selected depending on the luminophore, in order to pass only the luminescence light. The imaging path consists further of a camera objective COB (f = 50mm, f/1.8D) to focus the collimated light onto an image sensor of a camera CAM. The camera may be a greyscale global-shutter camera.

The two illumination paths each project excitation light onto the sample at an angle of 30° from the imaging path. The illumination paths are offset by an azimuth angle of 40° from each other. The type and number of LEDs present in the two illumination paths are modifiable and may be adapted to the envisaged application of the device.

According to a first example, and as represented in Figure 3, in a first illumination path, the device comprises a blue LED LS6 (470 nm). The light from the blue LED LS6 is collimated using a high numerical aperture condenser lens L6 before being filtered with a corresponding excitation filter OF6. The light is focused onto the small end of a tapered lightpipe LP using a plano-convex lens L9. The lightpipe LP is used to homogenize the input light, through multiple internal reflections, providing homogeneous light over the pipe's exit face. The lens L10 used after the lightpipe LP is a matched achromatic doublet pair and conjugates the exit face of the lightpipe LP to the sample plane, forming an illumination area on the sample S. The other illumination arm comprises the same elements (470 nm LED LS7, condenser lens L7, filter OF7, plano-convex lens L11, and lightpipe LP2), in order to allow for higher light intensities to be achieved.

In the first illumination path, a second, 405 nm LED LS8 of which the light is collimated using another condenser lens L12, is coupled with an appropriate excitation filter OF8 and through a dichroic mirror DM.

The macro-imager according to the first example is in particular designed for measurements with a Dronpa-2 solution sample. In this case, the two wavelengths 470 et 405 nm are adapted to promote the photoconversion from state **1** to state **2**, and from state **2** to state **1**, respectively.

According to a second example, the macro-imager has a first illumination path as in the first example described with reference to Figure 3. The second illumination path comprises a blue 470 nm LED with a corresponding filter, and a green LED, used without excitation filter. A dichroic mirror is used to combine the light from the two LEDs in the second illumination path.

The macro-imager according to the second example is in particular designed for measurements of the photosynthetic apparatus of *Arabidopsis thaliana* plants. In this case, the excitation is realized at 470 nm with one or two LEDs according to the RIOM or HIOM protocol, respectively.

The LEDs may be driven were driven in different ways, depending on the type of sample to be measured.

For example, with Dronpa-2, high values of intensity of the excitation lights are requested. In this case, the LEDs are driven using an LED driver, and the LED outputs are modulated using a waveform generator.

In the case of the experiments with *Arabidopsis thaliana,* where lower light intensities are required, the LEDs may be driven directly with a waveform generator.

The macro-imager according to the embodiments described herein is preferably placed in a dark box, in order to prevent environmental light from reaching the sample(s) and interfering with measurements.

In the devices implementing the present invention, triggering of the camera acquisition is synchronized with the start of the periodic modulation of the excitation light.

A data processing unit DPU such as a computer controls the operation of the waveform generation, in order to obtain the desired illumination conditions. The data processing unit DPU also receives the signals acquired by the camera CAM. The signals correspond to fluorescence light intensities. The DPU processes the signals, such as to extract the amplitudes or amplitude components used for determining kinetic information according to the present invention.

The method according to both the HIOM and RIOM aspects of the invention can be implemented with either one of the devices described above.

The HIOM and RIOM protocols have been experimentally evaluated with several reversibly photo-convertible luminophores exhibiting luminescence lifetimes spanning a wide range, but too short to be directly imaged with a standard low-frequency camera. In the following, examples of the inventive methods implemented with the devices according to the examples described above, i.e., the epifluorescence microscope and the fluorescence macro-imager, are described.

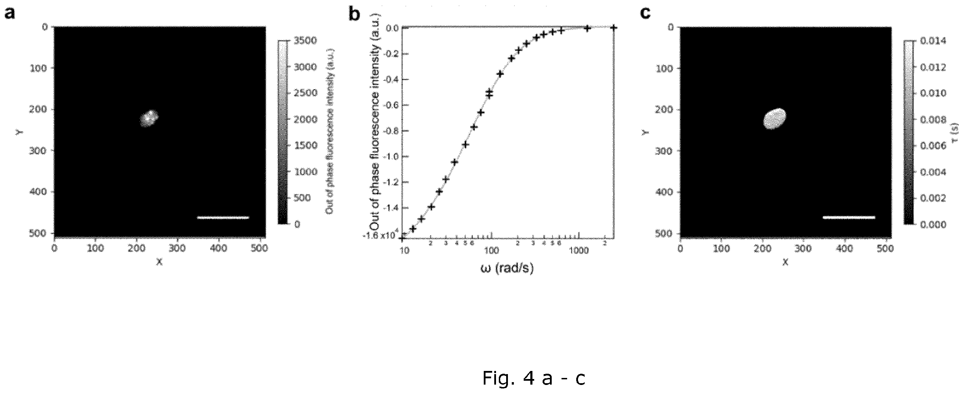

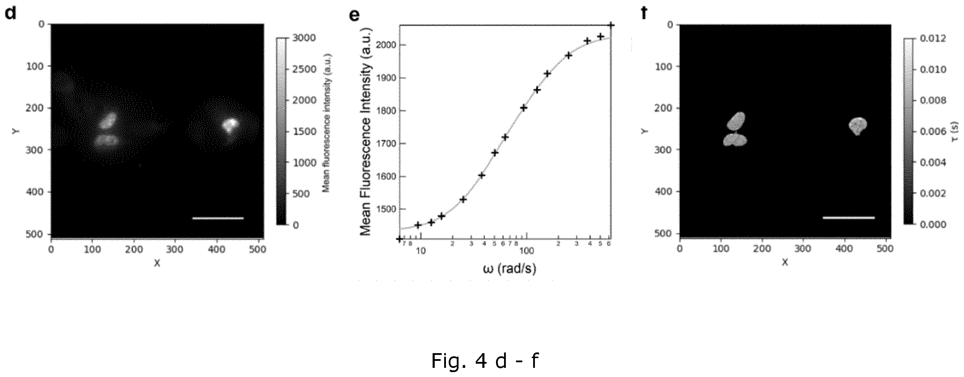

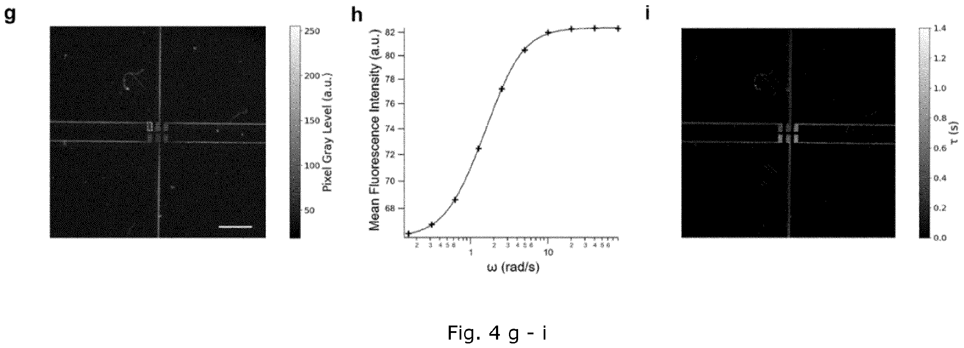

Figure 4 shows measurements carried out according to embodiments of the method of the invention, on different types of samples.

Figures 4a - 4c show H-OPIOM measurements on fixed cells labelled at the nucleus with the fluorescent protein Dronpa-2, which, at neutral pH, reversibly photoswitches between a bright and a dark state upon blue and violet illumination. Average excitation light intensities at 470 and 405 nm are fixed to 6.4 and 4.0 $W/cm^2$, respectively. Images at 12 Hz acquisition frequency are recorded upon sinusoidally modulating the 470 and 405 nm excitation lights in antiphase with 100% duty cycle at frequencies departing from each other by 1 Hz in the [1 Hz; 100 Hz] range (Figure 4a). The dependence of the amplitude of the quadrature-delayed component of the fluorescence signal modulated at 1 Hz at each pixel on the angular frequency of the 470 nm light modulation is fitted (Figure 4b). An H-OPIOM image of the Dronpa-2 photoswitching time is then retrieved from the fit (Figure 4c). The H-OPIOM image is consistent with the expectation: $<\tau>$ = 12.8 $\pm$ 0.5 ms over the nucleus is found, whereas $<\tau>$ = 9,5 $\pm$ 1 ms is anticipated from exploiting the photoswitching information at 470 and 405 nm for Dronpa-2 ([Querard 2017], [Chouket 2022]).

Figures 4d - 4f show RIOM measurements on the same sample. Images at 12 Hz acquisition frequency are acquired upon applying 470 nm excitation light sinusoidally modulated within the [1 Hz; 100 Hz] range around 1.8 $W/cm^2$) with 100% duty cycle, and constant 6.4 $W/cm^2$ 405 nm excitation light (Figure 4d). After fitting the dependence of the average fluorescence signal on the angular frequency of the 470 nm light modulation at each pixel (Figure 4e), a RIOM image of the Dronpa-2 photoswitching time is retrieved. The RIOM image is again in line with the expectation (Figure 4f): $<\tau>$ = 8,2$\pm$1,4 ms over the nucleus is found, whereas $<\tau>$ = 10$\pm$1 ms is computed from the Dronpa-2 photoswitching information.

A RIOM wide-field image of the Dronpa-2 photoswitching time is also obtained from a Dronpa-2 solution contained in micro-chambers of a microfluidic device by using a fluorescence macro-imager. Figures 4g - 4i show the corresponding measurements and results, similarly to Figures 4d - 4f. In this case, $<\tau>$ = 485$\pm$15 ms was found over the micro-chambers in RIOM whereas $<\tau>$ = 545$\pm$50 ms was anticipated from photoswitching information available for Dronpa-2 ([Querard 2017], [Chouket 2022]).

The measurements and results represented in Figure 4 are obtained with sinewave-modulated illumination of the excitation light(s). Sinewave modulation is the simplest periodical modulation to be implemented at any fundamental frequency. When using LEDs as light sources, sinewave modulation benefits from ease of correction for the generation of harmonics over a wide range of frequencies.

Of course, the HIOM and RIOM aspects of the method of the invention may also be implemented with other periodically modulated illuminations.

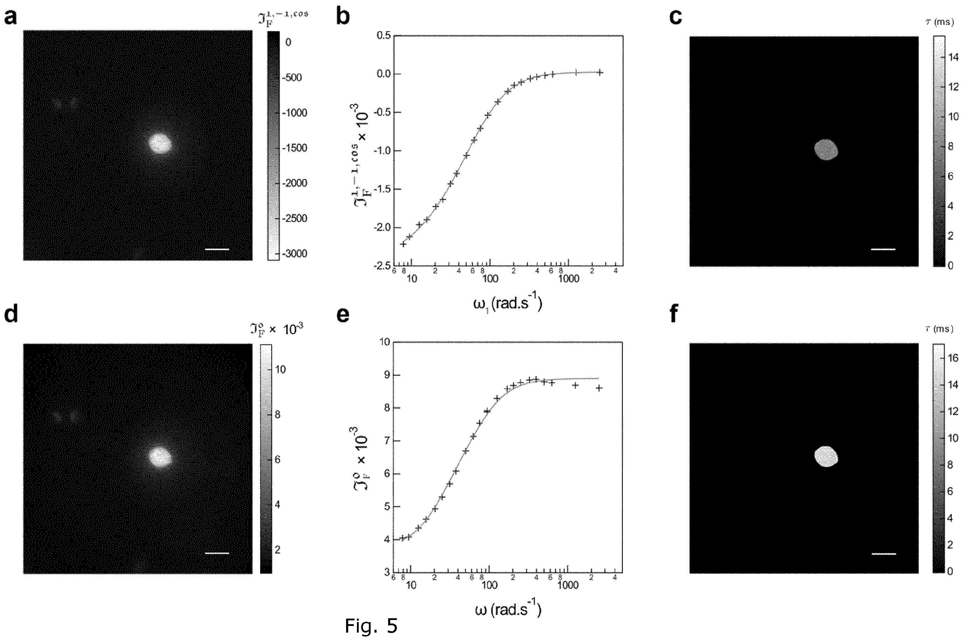

As a representative example, and with reference to Figure 5, square-wave modulated illumination is implemented with both protocols. Signals of high amplitude and reliable fitting functions of their dependence on the frequency of modulated illumination may be obtained.

Figures 5a -5f show equivalent measurements to those shown in Figures 4a -4f, carried out on fixed cells labelled at the nucleus with the fluorescent protein Dronpa-2, the measurements being carried out with square-wave modulated excitation illumination. Figures 5a - 5c relate to measurements under the HIOM protocol, and Figures 5d - 5f relate to measurements under the RIOM protocol. HIOM and RIOM maps of the fluorescence photoswitching time are obtained in agreement with the expectations: $<\tau>$ = 8.8 $\pm$ 0.4 ms and 14.4 $\pm$ 0.2 ms is found, respectively, over the nucleus whereas $<\tau>$ = 11.4 $\pm$ 0.2 ms was anticipated ([Querard 2017], [Chouket 2022]).

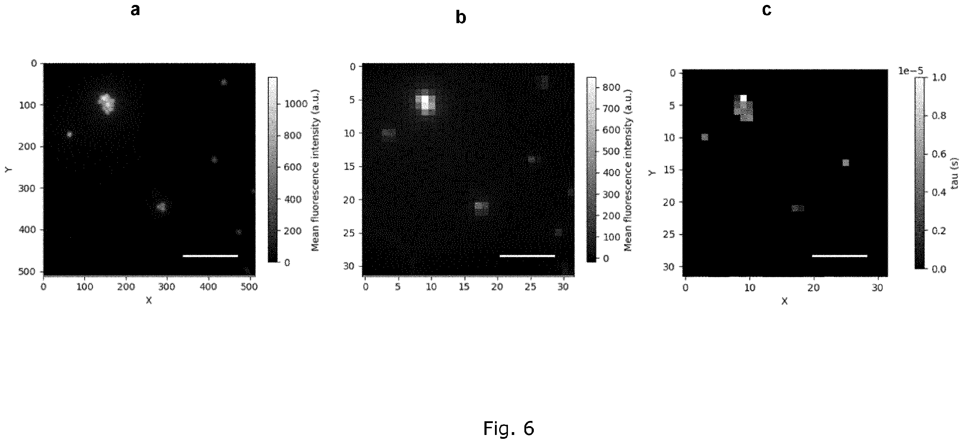

Figure 6 shows measurements carried out according to embodiments of the method of the invention, with luminophores endowed with shorter photoactivation lifetimes with respect to Dronpa-2, in order to evaluate, in an exemplary manner, the applicability of the RIOM protocol and to determine the shortest photoactivation lifetimes that could be imaged implementing the methods with the epifluorescence microscope and fluorescence macro-imager as described above.

In the example of Figure 6, the method according to the RIOM protocol is implemented to image monodisperse polystyrene beads loaded with a selected luminescent metal complexe under sinusoidally modulated illumination in epifluorescence microscopy. Figures 6a and 6b show 12-Hz acquired images of the RIOM signal from Platinum octaethylporphyrin (PtOEP) under an excitation light at $\lambda$ = 405 nm modulated at f = 100 Hz without and with binning, respectively. As displayed in Figure 6, it is possible to retrieve maps of lifetimes of their triplet state in the [1 $\mu$s; 1 ms] range. In particular, the lifetime of triplet-state phosphorescence emitters is imaged with quantum yields as low as a few percent with some pixel binning (Figure 6c).

The method according to aspects of the present invention may also be used to image information on the physiological state of photosynthetic organisms. In particular, the HIOM and RIOM protocols may be exploited to retrieve Bode diagrams and obtain images therefrom. Bode diagrams deliver kinetic fingerprints in the frequency domain equivalent to the signatures presently obtained in the time domain.

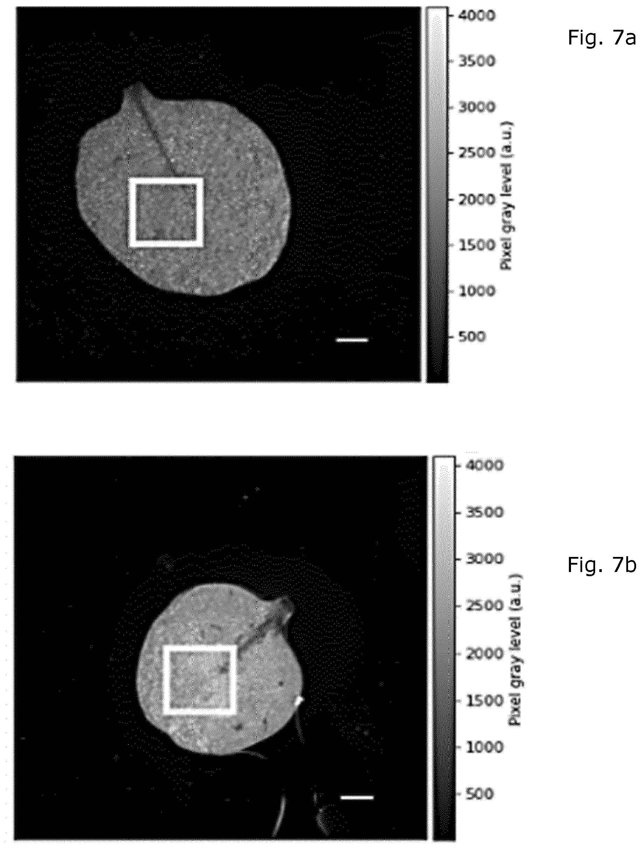

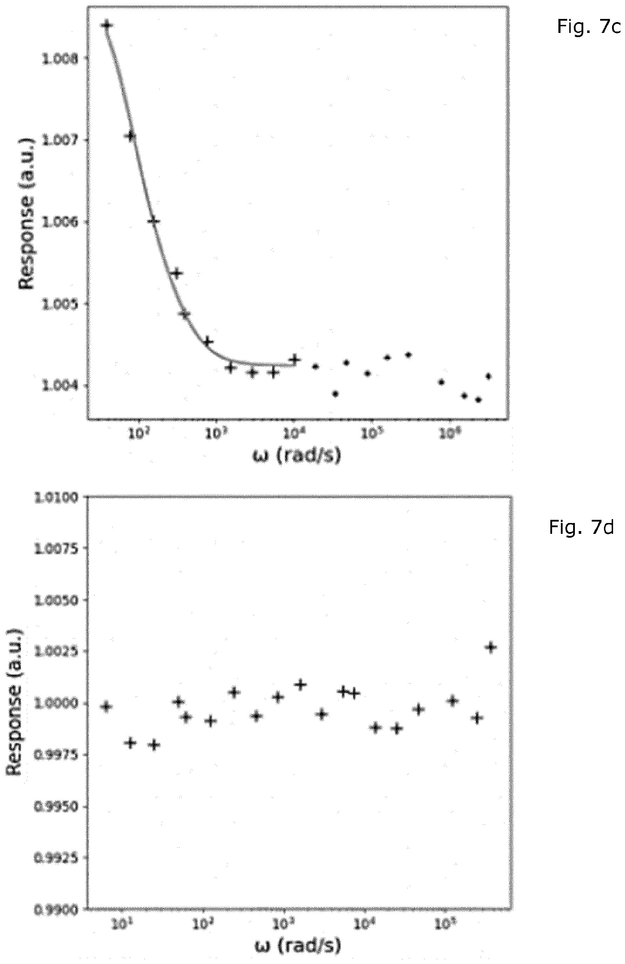

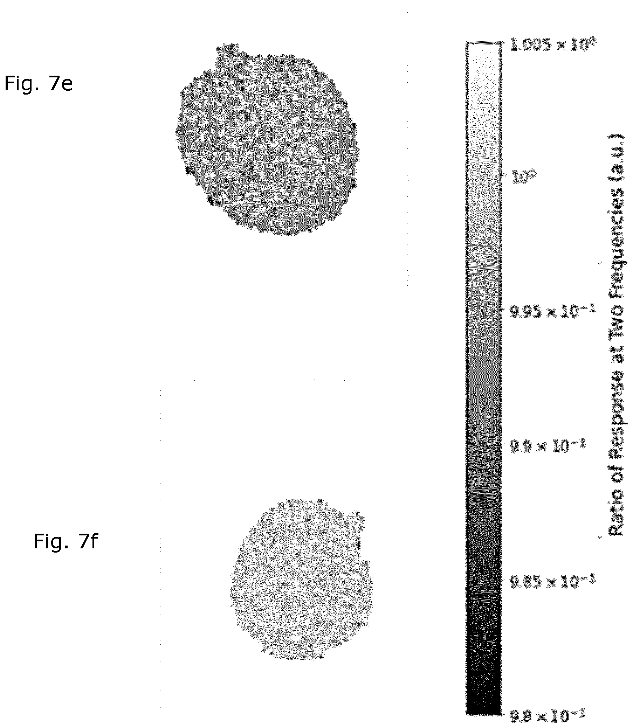

Figures 7 to 9 show Bode diagram retrieval in both HIOM and RIOM protocols on leaves of wild type *Arabidopsis*

*thaliana* (Columbia-0) over the 3-393221 and 1-80000 Hz, respectively, modulation-frequency ranges recovering the [1 ms; 1 s] time range usually exploited to acquire the corresponding fluorescence response to constant illumination in the time domain.

In Figures 7a-7e, wide-field macroscopic fluorescence imaging, such as implemented with a device of the example represented in Figure 3, is used to capture fluorescence emission at 690 nm of the photosynthetic apparatus of wild-type *Arabidopsis thaliana* (Columbia-0), under modulated illumination and an interfering sunlight source, with and without a solution of an inhibitor of photosynthesis applied (3-(3,4-dichlorophenyl)-1,1-dimethylurea (DCMU); 200 $\mu$M, 2% EtOH). Image frames are acquired (with a 1 s exposure time) under a 1 Hz modulated illumination at 470 nm ($I^0$ = 100 $\mu$E/m$^2$s) with (Figure 7a) and without (Figure 7b) DMCU treatment.

The corresponding Bode diagrams (Figures 7c and 7d) are retrieved from a set of fluorescence images corresponding to a plurality of modulation frequencies. In the Bode diagrams, the markers correspond to response data, and the solid line is an eye guideline from applying a fitting function such as given in equation (73), with $p_1$ = 0.0014, $p_2$ = 0.32, $p_3$ = 1.0, and $\tau$ = 119 $\pm$ 112 ms.

Figures 7e and 7f show image maps of the ratio of the response at 1 Hz versus 20 Hz for the cases with (Figure 7e) and without DCMU treatment (Figure 7f).

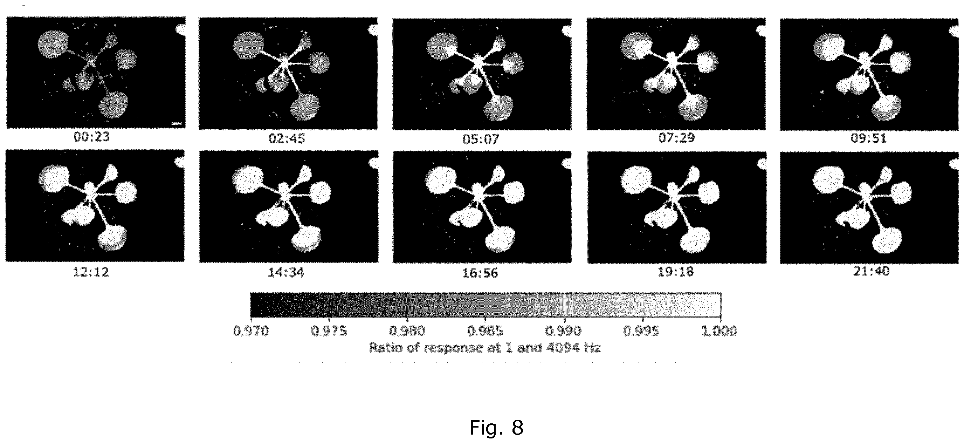

Figure 8 shows maps of the ratio of the response at 1 Hz vs 4094 Hz of a full plant upon injection of a solution of DCMU into the soil, over the course of almost 22 hours. The maps are obtained from Bode diagrams as in Figures 7a-7f.

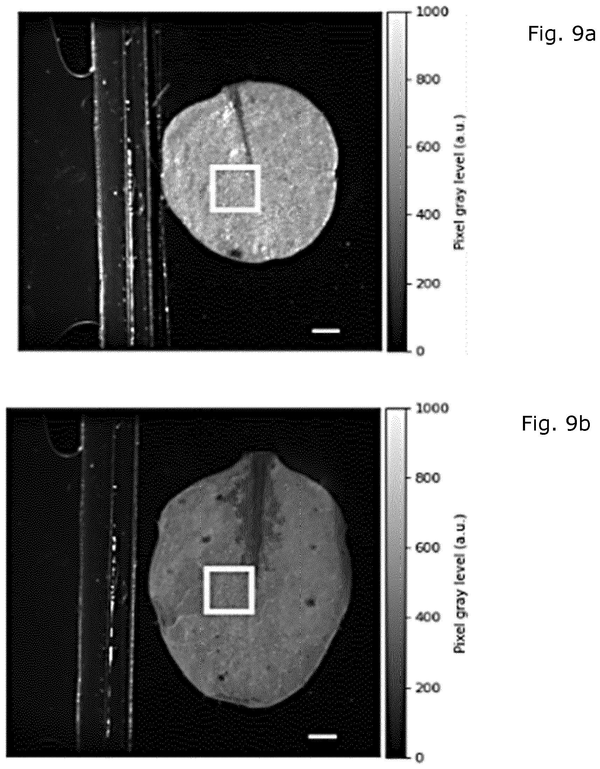

Image frames from 12 Hz acquired videos of leaves with (Figure 9a) and without (Figure 9b) DCMU treatment under two 470 nm excitation lights sinusoidally modulated and in antiphase, with $I_1$ = 50 $\mu$E/m$^2$s, $f_1$ = 3 Hz; $Iz$ = 50 $\mu$E/m$^2$s, $f_2$ = 2 Hz.

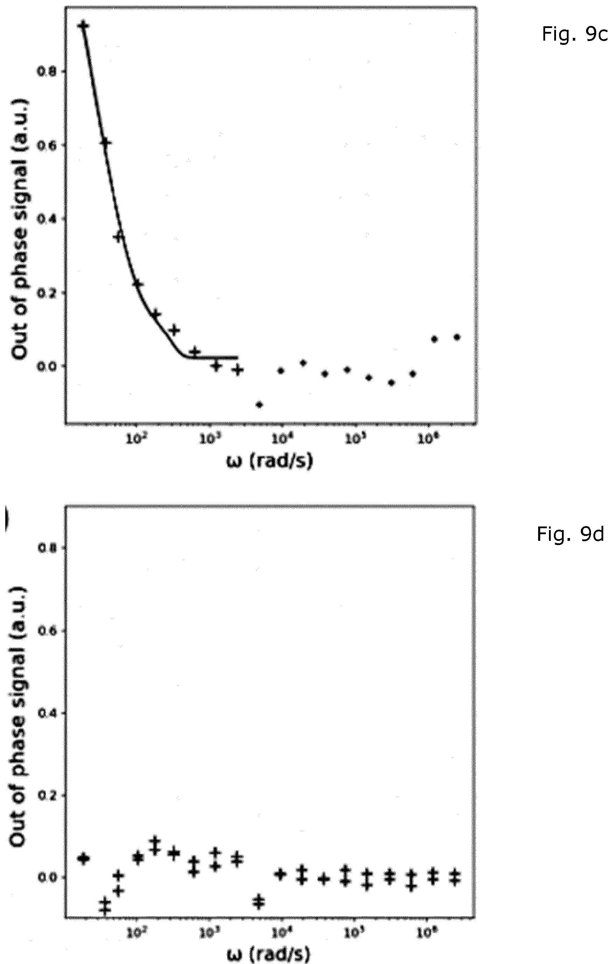

The Bode diagrams retrieved from the images show the dependence of the quadrature-delayed component of the fluorescence emission at 1 Hz with (Figure 9c) and without (Figure 9d) DCMU treatment. In the Bode diagrams, the markers correspond to measured data, and the solid line is an eye guideline from applying a fitting function such as given in equation (74), with $p_1$ = 1554, $p_2$ = -6.64, $p_3$ = 0.023, and $\tau$ = 25 $\pm$ 2 ms.

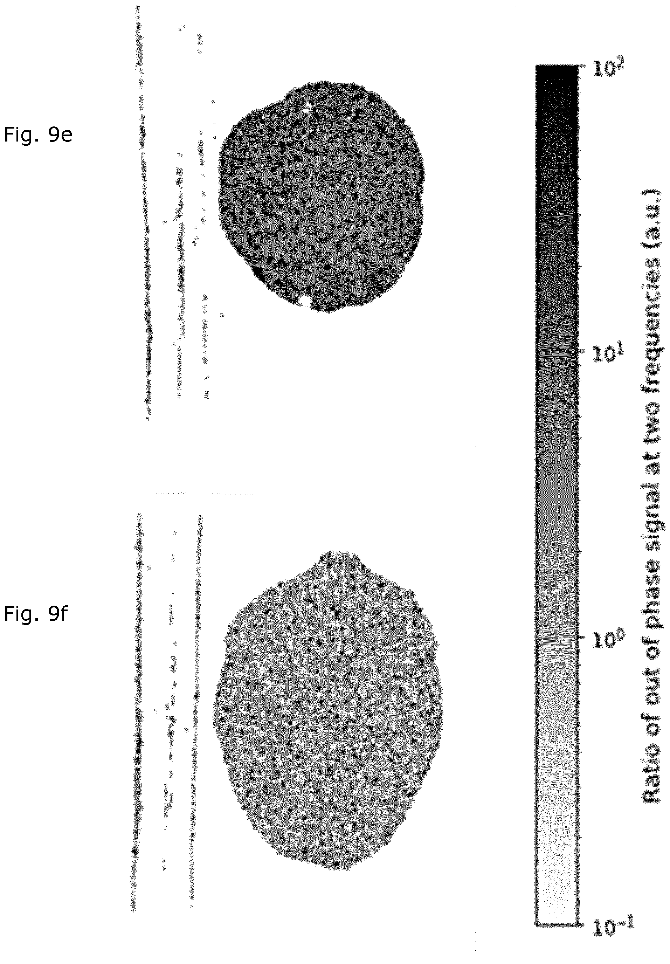

Figures 9c and 9f show image maps of the ratio of the response at 1 Hz versus 773 Hz for the cases with (Figure 9e) and without DCMU treatment (Figure 9f).

As can be seen in Figures 7 to 9, both H-OPIOM and RIOM protocols enable to extract an image of Bode diagrams, which can be processed to retrieve a map of photoactivation lifetime with a simple ratio. Furthermore, they deliver a markedly different Bode diagram from a leaf conditioned with DCMU, a current inhibitor of photosynthesis blocking electron flow from photosystem II. Hence, H-OPIOM and RIOM are relevant to retrieve a specific kinetic fingerprint evidencing the presence of the latter herbicide in leaves. Furthermore, we could analyze the kinetics of DCMU spreading from the roots to the leaves by recording a time series of RIOM images *of A. thaliana* plant in the presence of interfering ambient light. Figures 7 to 9 show that the Bode diagram can be used to demonstrate that DCMU smoothly progresses from the roots to the leaves at the 15 h time scale, which range is in line with previous measurements exploiting the fluorescence level as stress reporter. However, in contrast to the latter observable, the Bode diagram provides a kinetic fingerprint bringing more information on the stress source.

Hence, HIOM and RIOM emerged as powerful protocols for delivering wide-field luminescence lifetime imaging on simple cheap optical setups without any expansive detectors endowed with high-frequency modulation or fast gating. They have here been already applied on several types of reversibly photoactivable luminescent systems but their theoretical principle is very general so as to enable for a wide variety of applications with LEDs up to 1 MHz frequency of light modulation. However, they will only deliver reliable observables when the control parameters of modulated illumination (mean light intensity/ies and frequency/ies) are matched with the photoactivation kinetics.

The methods and devices according to embodiments of the present invention may be implemented with any reversibly photo-convertible luminophores as long as the kinetic model given in equation (1) accounts for their dynamic behaviour under illumination at an appropriate time scale. Such luminophores may include fluorescent probes, phosphorescent probes, reversibly photo-convertible fluorophores, and the photosynthetic apparatus.

Of course, the invention is not limited to the examples detailed above. In particular, different modulation schemes and more than two excitation lights may be used.

References

[Querard 2015]: J. Querard et al., Expanding discriminative dimensions for analysis and imaging, Chem. Sci., 2015, 6, 2968-2978

[Querard 2017]: J. Querard et al., Resonant out-of-phase fluorescence microscopy and remote imaging overcome spectral limitations, Nat. Commun., 2017, 8, 969

[Chouket 2022]: R. Chouket et al, Extra kinetic dimensions for label discrimination, Nat. Commun., 2022, 13, 1482.

**Claims**

1. A method for determining luminescence kinetic information of at least one reversibly photo-convertible luminescent species (P) in a sample (S), the method comprising the steps of:

   a) illumination of the sample (S) with at least a first and a second excitation light, the intensity of the first excitation light being periodically modulated at a frequency $f_1$, and the intensity of the second excitation light being periodically modulated at a frequency $f_2$, wherein $f_1 \neq f_2$,
   the excitation lights being adapted to promote a luminescence light emission from the at least one luminescent species (P),
   b) detection, with an optical detector (CAM), of the luminescence light, the intensity of the luminescence light being modulated at a frequency difference $\Delta f = f_1 - f_2$, for a plurality of modulation frequencies, $f_1$, of the first excitation light,
   c) extraction, for a plurality of modulation frequencies, $f_1$, of the first excitation light, of an amplitude of the intensity of the luminescence light,
   d) determination of a kinetic information of the at least one reversibly photo-convertible luminescent species (P) from the dependence of the extracted luminescence amplitude on the modulation frequency, $f_1$, of the first excitation light.

2. The method according to claim 1, wherein the average intensities of the first and the second excitation lights, the modulation frequency, $f_1$, of the first excitation light, and the frequency difference, $\Delta f$, are chosen to approach the maximum of

   ▪ the phase-quadrature luminescence amplitude when the modulation periods of the first and the second excitation lights are offset by 0 or $\pi$,.
   ▪ the in phase luminescence amplitude when the modulation periods of the first and the second excitation lights are offset by $\pi/2$ or $3\pi/2$.

3. The method according to any one of the preceding claims, wherein the first excitation light has a wavelength $\lambda_1$, and the second excitation light has a wavelength $\lambda_2$, and wherein $\lambda_1 = \lambda_2$ or $\lambda_1 \neq \lambda_2$.

4. The method according to any one of the preceding claims, wherein the frequency difference, $\Delta f$, is below 1000 Hz.

5. A method for determining luminescence kinetic information of at least one reversibly photo-convertible luminescent species (P) in a sample (S), the method comprising the steps of:

   a) illumination of the sample (S) with at least a first excitation light, the intensity of the first excitation light being periodically modulated at a frequency f,
   the first excitation light being adapted to promote a luminescence light emission from the at least one luminescent species (P),
   b) detection of the luminescence light with an optical detector (CAM), the intensity of the luminescence light being an average intensity, for a plurality of modulation frequencies, f, of the at least first excitation light,
   c) extraction, for a plurality of modulation frequencies, f, of the at least first excitation light, of the average luminescence intensity,
   d) determination of a kinetic information of the at least one reversibly photo-convertible luminescent species (P) from the dependence of the average luminescence intensity on the modulation frequency, f, of the first excitation light.

6. The method according to claim 5, wherein the illumination step comprises the illumination of the sample (S) with a first excitation light, the intensity of the first excitation light being periodically modulated at a frequency, f.

7. The method according to claim 5, wherein the illumination step comprises the illumination of the sample (S) with a first excitation light and a second excitation light, the intensity of the first excitation light being periodically modulated at a frequency, f, and the intensity of the second excitation light being constant.

8. The method according to claim 5, wherein the illumination step comprises the illumination of the sample (S) with a first excitation light and a second excitation light, the intensities of the first and second excitation lights being periodically modulated at the same frequency, f, and in antiphase with respect to each other.

9. The method according to claim 7 or 8, wherein the first excitation light has a wavelength $\lambda_1$, and the second excitation light has a wavelength $\lambda_2$, and wherein $\lambda_1 = \lambda_2$ or $\lambda_1 \neq \lambda_2$.

10. The method according to any one of claims 5 to 9, wherein the average intensity of the at least first excitation light and the modulation frequency, f, of the first excitation light are chosen to approach the maximum of the amplitude of the frequency-induced dependence of the average luminescence intensity normalized by the luminescence intensity under the average intensity of the at least first excitation light.

11. The method according to any one of the preceding claims, wherein the determination of the kinetic information comprises the extraction of a luminescence lifetime of the at least one luminescent species (P).

12. The method according to the preceding claim, further comprising imaging the luminescence lifetime according to a field of view of the detector (CAM).

13. The method according to any one of the preceding claims, wherein the determination of the kinetic information comprises the establishment of a Bode diagram linking the extracted luminescence signal to the modulation frequencies of the at least first excitation light.

14. The method according to any one of the preceding claims, wherein the determination step is realized using a fitting function comprising a ratio of two polynomial functions, the polynomial functions each comprising a sum of polynomials of the luminescence lifetime and the modulation frequency of the at least first excitation light.

15. The method according to claim 14, wherein the polynomials are of the order of 4 or less.

16. The method according to any one of the preceding claims, wherein the periodical modulation of the excitation light(s) is of sinusoidal form or square-wave form.

17. A device for carrying out a method according to any one of the preceding claims, the device comprising

- illumination means (LS1-LS8) configured for carrying out method step a),
- an optical detector (CAM) configured for carrying out method step b), and
- a data processing unit (DPU) configured for carrying out method steps c) and d).

18. Use of the method according to any one of the preceding claims for reporting on the kinetic information of a physiological state of photosynthetic organisms.

Fig. 1

Fig. 2

Fig. 3

Fig. 4 a - c

Fig. 4 d - f

EP 4 667 910 A1

g

h

i

Pixel Gray Level (a.u.)

Mean Fluorescence Intensity (a.u.)

ω (rad/s)

τ (s)

Fig. 4 g - i

Fig. 5

Fig. 6

EP 4 667 910 A1

Fig. 7a

Fig. 7b

Fig. 7c

Fig. 7d

Fig. 7e

Fig. 7f

Ratio of Response at Two Frequencies (a.u.)

$1.005 \times 10^0$

$10^0$

$9.95 \times 10^{-1}$

$9.9 \times 10^{-1}$

$9.85 \times 10^{-1}$

$9.8 \times 10^{-1}$

Fig. 8

Fig. 9a

Fig. 9b

Fig. 9c

Fig. 9d

Fig. 9e

Fig. 9f

Ratio of out of phase signal at two frequencies (a.u.)

$10^2$

$10^1$

$10^0$

$10^{-1}$

# EUROPEAN SEARCH REPORT

**Application Number**

EP 24 30 5957

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 131 170 B2 (MANDELIS ANDREAS [CA]; MELNIKOV ALEXANDER [CA]) 8 September 2015 (2015-09-08) | 1,3,4, 11,12, 14-18 | INV. G01N21/64 |
| A | * column 6, line 25 - column 40, line 62; claims; figures * | 2 | |
| X | US 2007/012884 A1 (FISHKIN JOSHUA B [US] ET AL) 18 January 2007 (2007-01-18) | 5-7,10, 13-18 | |
| Y | * paragraphs [0013] - [0054]; figures * | 8,9 | |
| Y | US 2023/028605 A1 (CHOUKET RAJA [FR] ET AL) 26 January 2023 (2023-01-26) | 8,9 | |
| A | * paragraphs [0047] - [0192]; figures * | 1,5,17 | |
| A,D | JÉRÔME QUÉRARD ET AL: "Resonant out-of-phase fluorescence microscopy and remote imaging overcome spectral limitations", NATURE COMMUNICATIONS, vol. 8, no. 1, 17 October 2017 (2017-10-17), XP055683510, DOI: 10.1038/s41467-017-00847-3 * the whole document * | 1,5,17, 18 | |

**TECHNICAL FIELDS SEARCHED (IPC)**

G01N

The present search report has been drawn up for all claims

| Place of search | Date of completion of the search | Examiner |
|---|---|---|
| Munich | 29 November 2024 | Politsch, Erich |

EPO FORM 1503 03.82 (P04C01)

## ANNEX TO THE EUROPEAN SEARCH REPORT
## ON EUROPEAN PATENT APPLICATION NO.

EP 24 30 5957

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | | Publication date | Patent family member(s) | | Publication date |
|---|---|---|---|---|---|
| US 9131170 | B2 | 08-09-2015 | NONE | | |
| US 2007012884 | A1 | 18-01-2007 | NONE | | |
| US 2023028605 | A1 | 26-01-2023 | EP | 3839484 A1 | 23-06-2021 |
| | | | JP | 2023506288 A | 15-02-2023 |
| | | | US | 2023028605 A1 | 26-01-2023 |
| | | | WO | 2021121898 A1 | 24-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015075209 A

- WO 2018041588 A

### Non-patent literature cited in the description

- **J. QUERARD et al.** Expanding discriminative dimensions for analysis and imaging. *Chem. Sci.*, 2015, vol. 6, 2968-2978
- **J. QUERARD et al.** Resonant out-of-phase fluorescence microscopy and remote imaging overcome spectral limitations. *Nat. Commun.*, 2017, vol. 8, 969

- **R. CHOUKET et al.** Extra kinetic dimensions for label discrimination. *Nat. Commun.*, 2022, vol. 13, 1482